(19) Europäisches Patentamt
European Patent Office
Office européen des brevets

(11) **EP 4 290 283 A1**

(12) **EUROPEAN PATENT APPLICATION**
published in accordance with Art. 153(4) EPC

(43) Date of publication:
**13.12.2023 Bulletin 2023/50**

(51) International Patent Classification (IPC):
**G02B 6/02** *(2006.01)*

(21) Application number: **22847106.6**

(86) International application number:
**PCT/CN2022/118218**

(22) Date of filing: **09.09.2022**

(87) International publication number:
**WO 2023/206912 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2022 CN 202210435404**

(71) Applicant: **Wuhan Raycus Fiber Laser Technologies Co., Ltd**
**East Lake Hi-Tech Development Zone**
**Wuhan, Hubei 430000 (CN)**

(72) Inventors:
• **MAI, Yifan**
  **Wuhan, Hubei 430000 (CN)**

• **SHEN, Xiang**
  **Wuhan, Hubei 430000 (CN)**
• **LI, Rong**
  **Wuhan, Hubei 430000 (CN)**
• **HUANG, Zhongya**
  **Wuhan, Hubei 430000 (CN)**
• **SHI, Jianhong**
  **Wuhan, Hubei 430000 (CN)**
• **LU, Kunzhong**
  **Wuhan, Hubei 430000 (CN)**
• **LI, Cheng**
  **Wuhan, Hubei 430000 (CN)**
• **YAN, Dapeng**
  **Wuhan, Hubei 430000 (CN)**

(74) Representative: **Maiwald GmbH**
**Elisenhof**
**Elisenstraße 3**
**80335 München (DE)**

(54) **OPTICAL FIBER STRIPPER, MANUFACTURING METHOD FOR OPTICAL FIBER STRIPPER, AND LASER DEVICE**

(57) The present application discloses an optical fiber stripper, a manufacturing method of the optical fiber stripper, and a laser device. The optical fiber stripper includes an optical fiber, the optical fiber stripper includes an optical fiber, the optical fiber includes a fiber core and a cladding covering the fiber core; a surface of the cladding includes a waveguide damage area and a light-transmitting area distributed along an extending direction of the optical fiber sequentially, the waveguide damage area is provided with a plurality of grooves distributed along the extending direction of the optical fiber sequentially, the light-transmitting area is provided with a plurality of micro-nano particles, and a particle size of each of the micro-nano particles is less than or equal to 200 nm. The optical fiber stripper provided in the present application has high stripping efficiency and large tensile strength.

FIG. 1

## Description

Technical Field

The present disclosure relates to the field of optical fiber technology, and, more particularly, to an optical fiber stripper, a manufacturing method of the optical fiber stripper, and a laser device.

Background of the Disclosure

With an increasing requirement for quality and efficiency in the industrial field, advantages of laser compared with traditional processing are more and more obvious. In recent years, high-power laser equipments, represented by a fiber laser equipment, have developed faster and faster. With an increase of power of the fiber laser equipment, requirements for high power cladding optical stripper are becoming higher and higher, which not only can withstand higher cladding optical power, but also needs higher stripping efficiency.

Summary of the Disclosure

Embodiments of the present application provide an optical fiber stripper, a manufacturing method of the optical fiber stripper, and a laser device, aiming to solve a problem of low stripping efficiency of prior optical fiber strippers.

The embodiments of the present application provide an optical fiber stripper, the optical fiber stripper includes an optical fiber, the optical fiber includes a fiber core and a cladding covering the fiber core, a surface of the cladding includes a waveguide damage area and a light-transmitting area distributed along an extending direction of the optical fiber sequentially, the waveguide damage area is provided with a plurality of grooves distributed along the extending direction of the optical fiber sequentially, the light-transmitting area is provided with a plurality of micro-nano particles, and a particle size of each of the micro-nano particles is less than or equal to 200 nm.

In some embodiments, a pitch between the centers of two adjacent micro-nano particles is less than or equal to 200 nm.

In some embodiments, the light-transmitting area is provided with a plurality of concave holes, and a bottom surface of each of the concave holes is protruded with the plurality of micro-nano particles.

In some embodiments, the micro-nano particles protrude from the bottom surface of each of the concave holes in a shape of column.

In some embodiments, a height of the micro-nano particles in a protruding direction is less than or equal to 200 nm.

In some embodiments, a pitch between the centers of two adjacent concave holes is less than or equal to 200 $\mu$m.

In some embodiments, the light-transmitting area is provided with a plurality of rows of the concave holes arranged at intervals along a circumference of the optical fiber sequentially, and the plurality of concave holes in each of the rows of the concave holes are sequentially distributed along the extending direction of the optical fiber.

In some embodiments, the light-transmitting area is provided with a plurality of concave hole groups distributed at intervals along the extending direction of the optical fiber sequentially, and a plurality of concave holes in each of the concave hole groups are sequentially distributed at intervals along a circumference of the optical fiber.

In some embodiments, the concave holes in two adjacent concave hole groups are mutually staggered.

In some embodiments, each of the concave hole has a shape of a circular hole, a square hole, a triangular hole, or an elliptical hole.

In some embodiments, a length of the light-transmitting area in the extending direction of the optical fiber is less than or equal to 10 mm.

In some embodiments, a length of the light-transmitting area in the extending direction of the optical fiber is greater than 10 mm.

In some embodiments, an extending direction of each of the grooves is at an included angle with the extending direction of the optical fiber.

In some embodiments, the extending direction of each of the grooves is perpendicular to the extending direction of the optical fiber.

In some embodiments, a maximum depth of each of the grooves from the surface of the cladding is less than or equal to 120 $\mu$m.

In some embodiments, a length of the waveguide damage area in the extending direction of the optical fiber is less than or equal to 50 mm.

In some embodiments, a length of the waveguide damage area in the extending direction of the optical fiber is greater than 50 mm.

In some embodiments, the plurality of grooves in the waveguide damage area are sequentially adjacent in the extending direction of the optical fiber.

The embodiments of the present application further provide a laser device, the laser device includes the optical fiber stripper as defined above. The optical fiber stripper includes an optical fiber, the optical fiber includes a fiber core and a cladding covering the fiber core, a surface of the cladding includes a waveguide damage area and a light-transmitting area distributed along an extending direction of the optical fiber sequentially, the waveguide damage area is provided with a plurality of grooves distributed along the extending direction of the optical fiber sequentially, the light-transmitting area is provided with a plurality of micro-nano particles, and a particle size of each of the micro-nano particles is less than or equal to 200 nm.

The embodiments of the present application further provide a manufacturing method of an optical fiber stripper, wherein the optical fiber includes a fiber core and a cladding covering the fiber core, a surface of the cladding includes a waveguide damage area and a light-transmitting area distributed along an extending direction of the optical fiber sequentially; and wherein the method includes:

processing and forming a plurality of grooves in the waveguide damage area of the cladding, the plurality of grooves being distributed along the extending direction of the optical fiber sequentially;

processing and forming a plurality of micro-nano particles in the light-transmitting area of the cladding, a particle size of each of the micro-nano particles being less than or equal to 200 nm.

Beneficial effects of the present application:

The optical fiber stripper provided by the embodiments of the present application destroys a waveguide structure on the surface of the cladding by providing the plurality of grooves in the waveguide damage area of the cladding of the optical fiber, and the grooves are distributed along an extending direction of the optical fiber sequentially. Moreover, the plurality of micro-nano particles with the particle size of less than or equal to 200 nm are disposed in the light-transmitting area of the cladding, so that the light-transmitting area of the cladding has good light transmittance, and light with lower fiber core numerical aperture (NA) in the cladding can be removed.

Therefore, when the cladding light in the cladding transmits along a distribution direction of the waveguide damage area and the light-transmitting area, the cladding light can first be scattered into scattered light through the plurality of grooves in the waveguide damage area. Moreover, the light with low NA in the cladding can be removed through the micro-nano particles in the light-transmitting area. Therefore, the fiber stripper has a higher stripping efficiency for the cladding light, achieves the higher stripping efficiency and a lower heat output in a shorter length, and has a greater tensile strength.

Brief Description of the Drawings

The technical solution and other beneficial effects of the present application will be obvious through a detailed description of the specific embodiments of the present application in combination with the accompanying drawings.

FIG 1 is a schematic structural diagram of an optical fiber stripper provided in an embodiment of the present application.

FIG 2 is a schematic enlarged diagram of concave holes in FIG 1.

FIG 3 is a flow chart of a manufacturing method of the optical fiber stripper provided in an embodiment of the present application

Reference numerals:

100, optical fiber stripper; 110, optical fiber; 120, cladding; 121, waveguide damage area; 122, grooves; 123, light-transmitting area; 124, micro-nano particles; 125, concave holes.

Detailed Description of the Embodiments

In the following, the technical scheme in the embodiment of the present application will be described clearly and completely in combination with the drawings. Obviously, the described embodiments are only a part of the embodiments of the present application, rather than all the embodiments. Based on the embodiments of the present application, all other embodiments obtained by those skilled in the art without creative work fall within the protection scope of the present application.

In the description of this embodiment, terms indicating orientation or location relationships such as "center", "longitudinal", "horizontal", "length", "width", "thickness", "up", "down", "front", "back", "left", "right", "vertical", "horizontal", "top", "bottom", "inside", "outside", "clockwise needl", "counterclockwise", etc. are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" aare only used for descriptive purposes and can not be understood as indicating or implying relative importance or implicitly indicating the number of indicated technical features. Thus, the features defining "first" and "second" may explicitly or implicitly include one or more of the features. Therefore, it cannot be understood as a limitation on the present application. In the description of the present application, "a plurality of" means two or more, unless otherwise specified.

In the present disclosure, unless otherwise specified and defined, terms "install", and "connect" should be understood in a broad sense, for example, it may be a fixed connection, a detachable connection, or made as a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

In the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "on", "above", or "up " the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

The following disclosure provides many different embodiments or examples to realize different structures of the present application. In order to simplify the disclosure of the present application, components and settings of specific examples are described below. Of course, they are only examples and are not intended to limit the present application. In addition, the present application may repeat reference numerals and/or reference letters in different examples for the purpose of simplification and clarity, which does not in itself indicate the relationship between the various embodiments and/or settings discussed. In addition, the present application provides examples of various specific processes and materials, but those skilled in the art can be aware of the present application of other processes and/or the use of other materials.

The present application provides an optical fiber stripper, a manufacturing method of the optical fiber stripper, and a laser device, which are described in detail below respectively.

First, embodiments of the present application provide an optical fiber stripper.

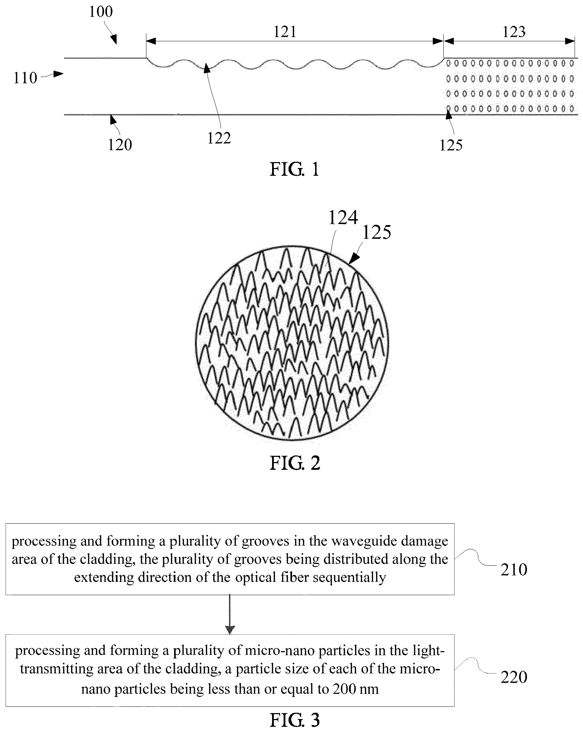

FIG 1 is a schematic structural diagram of an optical fiber stripper provided in embodiments of the present application. As shown in FIG 1, the optical fiber stripper 100 includes an optical fiber 110. The optical fiber 110 includes a fiber core (not shown in FIG 1) and a cladding 120 covering the fiber core. A surface of the cladding 120 includes a waveguide damage area 121 and a light-transmitting area 123 distributed along an extending direction of the optical fiber 110 sequentially. The waveguide damage area 121 is configured to destroy a waveguide structure on the surface of the cladding 120, and the light-transmitting area 123 is configured to increase light transmittance of the surface of the cladding 120, so that the light in the cladding 120 can easily be emitted from the light-transmitting area 123.

In the waveguide damage area 121, a plurality of grooves 122 are disposed along the extending direction of the optical fiber 110 sequentially to destroy the waveguide structure on the surface of the cladding 120, so that light of lower-order modes around the fiber core can be converted into light of higher-order modes.

As shown in FIG 1 and FIG 2, a plurality of micro-nano particles 124 are disposed in the light-transmitting area 123. A particle size of each of the micro-nano particles 124 is less than or equal to 200 nm, so that the light-transmitting area 123 of the cladding 120 has great light transmittance.

According to the Rayleigh scattering model, when a beam of light is irradiated on a rough surface with a submicron-nanoscale structure, an intensity of the scattered light satisfies following formula:

$$\frac{I}{I_0} = \frac{1 + COS^2\theta}{2S^2} \left(\frac{2\pi}{\lambda}\right)^4 \left(\frac{n^2 - 1}{n^2 + 2}\right)^2 \left(\frac{d}{2}\right)^6$$

wherein I is an incident light intensity, $I_0$ is a scattered light intensity. $\theta$ is an angle of the incident light, S is a distance between a detector and the surface of the submicron-nanoscale structure and the detector is an optical power meter or a photodiode, $\lambda$ is a wavelength of the light, n is a refractive index of the submicron-nanoscale structure, and d is a particle size of the submicron-nanoscale structure.

According to the above formula, an increase of the particle sizes of the particles disposed on the surface of the cladding 120 will strengthen the scattering intensity. Therefore, a key measure to reduce the scattering effect on the surface of the cladding 120 is to reduce the particle sizes of the particles disposed on the surface of the cladding 120. Therefore, it is prepared with micronano particles on the surface of the cladding 120 as far as possible to improve the roughness, enhance an anti-scattering performance of the surface of the cladding 120, and increase the light transmittance of the surface of the cladding 120.

The embodiments of the present application destroy the waveguide structure on the surface of the cladding 120 by providing the plurality of grooves 122 in the waveguide damage area 121 of the cladding 120 of the optical fiber 110, and the grooves 122 are distributed along the extending direction of the optical fiber sequentially. Moreover, the plurality of micro-nano particles 124 with the particle size of less than or equal to 200 nm are disposed in the light-transmitting area 123 of the cladding 120, so that the light-transmitting area 123 of the cladding 120 has good light transmittance, so that light with lower fiber core numerical aperture (NA) in the cladding 120 can be removed.

Therefore, when the cladding light in the cladding 120 transmits along a distribution direction of the waveguide damage area 121 and the light-transmitting area 123, the cladding light can first be scattered into scattered light through the plurality of grooves 122 in the waveguide damage area 121. Moreover, the light with low NA in the cladding 120 can be removed through the micro-nano particles 124 in the light-transmitting area 123. Therefore, the optical fiber stripper 100 has a high stripping efficiency for the cladding light, and achieves the higher stripping efficiency and a lower heat output in a shorter length, and has a greater tensile strength.

In some embodiments, a pitch distance between centers of two adjacent micro-nano particles 124 is less than or equal to 200 nm. It should be noted that the pitch between the centers of two adjacent micro-nano particles 124 refers to a distance between the centers of two adjacent micro-nano particles 124, or a distance between highest points of two adjacent micro-nano particles 124.

By making the pitch between the centers of two adjacent micro-nano particles 124 less than or equal to 200nm, the embodiments of the present application can further improve the light transmittance of the light-transmitting area 123 of the cladding 120, thereby further improving the effect of removing the light with low NA in the cladding 120.

Specifically, the micro-nano particles 124 protrude from the bottom surface of the concave holes 125 in a shape of column. A height of the micro-nano particle 124 in a projection direction is less than or equal to 200 nm. The height may be 180 nm, 170 nm, 150 nm, and so on. A diameter of the micro-nano particle 124 is less than or equal to 200 nm, and the diameter may be 180 nm, 170 nm, 150 nm, and so on. The pitch between the centers of two adjacent micro-nano particles 124 may be 180 nm, 170 nm, 150 nm, etc.

In some embodiments, the light-transmitting area 123 is provided with a plurality of concave holes 125, and a bottom surface of each of the concave holes 125 is protruded with the plurality of micro-nano particles 124. Therefore, the light-transmitting area 123 of the cladding 120 can be easily processed by femtosecond laser to form the micro-nano particles 124. A pitch between centers of two adjacent concave holes 125 is less than or equal to 200 $\mu$m so as to further improve the light transmittance of the light-transmitting area 123 of the cladding 120. The pitch between the centers of two adjacent concave holes 125 refers to a distance between the centers of two adjacent concave holes 125.

Specifically, the light-transmitting area 123 is provided with a plurality of rows of the concave holes 125 arranged at intervals along a circumference of the optical fiber 110 sequentially. The plurality of concave holes 125 in each of the rows of the concave holes 125 are sequentially distributed along the extending direction of the optical fiber 110, so that the distribution of the plurality of concave holes 125 in the light-transmitting area 123 is more uniform, and thus the light transmittance of the light-transmitting area 123 are basically consistent.

A quantity of the rows of the concave holes 125 and a quantity of the concave holes 125 in each row of the concave holes 125 can be determined according to a diameter of the cladding 120 of the optical fiber 110, which is not limited here. For example, in the embodiments of the present application, the diameter of the cladding 120 of the optical fiber 110 is 360 $\mu$m. 23 rows of the concave holes 125 are uniformly distributed in the circumferential direction of the cladding 120, and the quantity of the concave holes 125 in each row of the concave holes 125 is 100. Moreover, a pitch between centers of two corresponding concave holes 125 in two adjacent rows of the concave holes 125 is less than or equal to 200 $\mu$m. In a same row of the concave holes 125, a pitch between centers of two adjacent concave holes 125 is less than or equal to 200 $\mu$m。

Of course, the plurality of concave holes 125 of the light-transmitting area 123 can also be arranged in other ways. For example, the plurality of concave holes 125 in the light-transmitting area 123 can be divided into a plurality of concave hole groups distributed at intervals along the extending direction of the optical fiber 110 sequentially. A plurality of concave holes 125 in each of the concave hole groups are sequentially distributed at intervals along a circumference of the optical fiber 110. The concave holes 125 in two adjacent concave hole groups are mutually staggered. Alternatively, the plurality of concave holes 125 of the light-transmitting area 123 can also be randomly arranged on a peripheral surface of the optical fiber 110.

In some embodiments, the concave hole 125 can be a circular hole, or a square hole, a triangular hole, an elliptical hole, and the like, without limitation.

In some embodiments, a length of the light-transmitting area 123 of the cladding 120 in the extending direction of the optical fiber 110 is less than or equal to 10 mm. Thus, while the micro-nano particles 124 in the light-transmitting area 123 of the cladding 120 can effectively eliminate the light with low NA in the cladding 120, avoiding that the length of the light-transmitting area 123 in the extending direction of the optical fiber 110 is too long to increase the processing cost of the light-transmitting area 123. The length of the light-transmitting area 123 in the extending direction of the optical fiber 110 may be 8 mm, 5 mm, 3 mm, and so on.

Of course, the length of the light-transmitting area 123 of the cladding 120 in the extending direction of the optical fiber 110 may also be greater than 10 mm. In this case, the elimination effect of the light with low NA in the cladding 120 can be further provided. However, with the increase of the length of the light-transmitting area 123 of the cladding 120 in the extending direction of the optical fiber 110, the improvement of the elimination effect of the light with low NA in the cladding 120 will be reduced, and the processing cost of the light-transmitting area 123 will increase.

In some embodiments, as shown in FIG 1, an extending direction of the groove 122 in the waveguide damage area 121 of the cladding 120 is at an included angle with the extending direction of the optical fiber 110. This can improve the damage effect of the grooves 122 on the waveguide structure on the surface of the cladding 120. The included angle formed by the extending direction of the groove 122 and the extending direction of the optical fiber 110 may be 90° ,85° , 70° , etc. Of course, when the extending direction of the grooves 122 is perpendicular to the extending direction of the optical fiber 110, the destruction effect on the waveguide structure on the surface of the cladding 120 is optimal.

In some embodiments, the plurality of grooves 122 are distributed on a same side of the optical fiber 110. Therefore, it is more convenient to process the waveguide damage area 121 of the cladding 120 to form the plurality of grooves 122 by laser. The grooves 122 can be formed by processing the waveguide damage area 121 with carbon dioxide laser. Of course, in addition to the carbon dioxide laser processing of the grooves 122, other lasers can also be used, or the grooves 122 can be processed in the waveguide damage area 121 by mechanical processing.

In some embodiments, a maximum depth of the groove 122 from the surface of the cladding 120 is less than or equal to 120 $\mu$m. In this way, the grooves 122 can have a good destruction effect on the waveguide structure on the surface of the cladding 120. Morerover, it can avoid excessive depth of the grooves 122 affecting strength of the cladding 120.

In some embodiments, a length of the waveguide damage area 121 in the extending direction of the optical fiber 110 is less than or equal to 50 mm, so that the waveguide damage area 121 can effectively scatter the cladding light while the overall length of the optical fiber stripper 100 is not too long. The length of waveguide damage area 121 in the extending direction of optical fiber 110 may be 30mm, 40mm, 45mm, etc., depending on the quantity of the cladding light in the cladding 120.

Of course, the length of the waveguide damage area 121 in the extending direction of the optical fiber 110 can also be greater than 50 mm. For example, the length of the waveguide damage area 121 in the extending direction of optical fiber 110 may be 60mm, 80mm, 100mm, etc. In this case, with the strengthening of the length of the waveguide damage area 121 in the extending direction of optical fiber 110, the improvement of cladding light scattering effect in the waveguide damage area 121 will be weakened.

In some embodiments, the plurality of grooves 122 in the waveguide damage area 121 of the cladding 120 are sequentially adjacent in the extending direction of the optical fiber 110. In this way, the highest points of the two adjacent grooves 122 can be overlapped, so that the quantity of the grooves 122 per unit length in the waveguide damage area 121 reaches maximum, and the waveguide damage effect of the waveguide area per unit length on the surface of the cladding 120 is optimal.

Specifically, the groove 122 on the surface of the cladding 120 extends in a straight line. The extending direction of the groove 122 is perpendicular to the extending direction of the optical fiber 110. The extending directions of the plurality of grooves 122 are parallel to each other. The plurality of grooves 122 are uniformly distributed along the extending direction of the optical fiber 110. An intersection line between an inner surface of the groove 122 and a surface perpendicular to the extending direction of the groove is a circular arc. The plurality of grooves 122 have a same shape. A distance between the inner surfaces of two adjacent grooves 122 and the dots of the intersection line of the surface perpendicular to the extending direction of the groove is equal to a diameter of the intersection line.

The embodiments of the present application also provide a manufacturing method of an optical fiber stripper. The optical fiber 110 comprises a fiber core and a cladding 120 covering the fiber core. A surface of the cladding 120 includes a waveguide damage area 121 and a light-transmitting area 123 distributed along an extending direction of the optical fiber 110 sequentially. As shown in FIG3, the manufacturing method of the optical fiber stripper includes steps 210 and 220, which are described in detail as follows:

Step 210, processing and forming a plurality of grooves in the waveguide damage area of the cladding, plurality of grooves being distributed along the extending direction of the optical fiber sequentially.

Specifically, the waveguide damage area 121 of the cladding 120 can be laser etched along the extending direction of the optical fiber 110 by a carbon dioxide laser device to form the plurality of grooves 122.

Specifically, the waveguide damage area 121 of the cladding 120 can be laser etched along a radial direction of the optical fiber 110 by the laser emitted by the carbon dioxide laser device to form a groove 122. Then the optical fiber 110 or the carbon dioxide laser device can be moved a certain distance along the extending direction of the optical fiber 110, and then the waveguide damage area 121 of the cladding 120 can be repeatedly laser etched by the carbon dioxide laser device to form another groove 122. The distance that the optical fiber 110 or the carbon dioxide laser device moves along the extending direction of the optical fiber 110 is a diameter of a light spot formed on the surface of the cladding 120 by the laser emitted by the carbon dioxide laser device, so that the plurality of grooves 122 in the waveguide damage area 121 of the cladding 120 are sequentially adjacent in the extending direction of the optical fiber 110.

Of course, the plurality of grooves 122 can also be formed in the waveguide damage area 121 of the cladding 120 by grinding or cutting. Specifically, the cylindrical rod with a grinding surface can be butted with the surface of the waveguide damage area 121 of the cladding 120, the extending direction of the cylindrical rod can be kept perpendicular to the extending direction of the optical fiber 110, and then the cylindrical rod can be controlled to rotate to form a groove 122 in the waveguide damage area 121. Alternatively, the groove 122 can be directly milled on the surface of the waveguide damage area 121 of the cladding 120 by a milling cutter.

Step 220, processing and forming a plurality of micro-nano particles in the light-transmitting area of the cladding, a particle size of each of the micro-nano particles being less than or equal to 200 nm.

Specifically, the light transmission area 123 of the cladding 120 can be laser etched by a femtosecond laser device to form a laser induced periodic surface structure (i.e., a plurality of micro nano particles 124). Alternatively, a plurality of micro/nano particles 124 can be formed in the light transmission area 123 of the cladding 120 by means of ion beam etching, photolithography, etc.

The manufacturing method of the optical fiber stripper provided by the embodiments of the present application destroys a waveguide structure on the surface of the cladding 120 by providing the plurality of grooves 122 in the waveguide damage area 121 of the cladding 120 of the optical fiber 110, and the grooves 122 are distributed along an extending direction of the optical fiber 110 sequentially. Moreover, the plurality of micro-nano particles 124 with the particle size of less than or equal to 200 nm are disposed in the light-transmitting area 123 of the cladding 120, so that the light-transmitting area 123 of the cladding 120 has good light transmittance, and light with lower fiber core numerical aperture (NA) in the cladding 120 can be removed.

Therefore, when the cladding light in the cladding 120 transmits along a distribution direction of the waveguide damage area 121 and the light-transmitting area 123, the cladding light can first be scattered into scattered light through the plurality of grooves 122 in the waveguide damage area 121. Moreover, the light with low NA in the cladding 120 can be removed through the micro-nano particles 124 in the light-transmitting area 123. Therefore, the fiber stripper 100 has a higher stripping efficiency for the cladding light, achieves the higher stripping efficiency and a lower heat output in a shorter length, and has a greater tensile strength.

The embodiments of the present application also propose a laser device. The laser device includes an optical fiber stripper. The specific structure of the optical fiber stripper refers to the above embodiments. Since the laser device adopts all the technical solutions of all the above embodiments, it has at least all the beneficial effects brought by the technical solutions of the above embodiments, and will not be described here.

An end of the optical fiber 110 of the optical fiber stripper 100 is connected with an optical path of an optical fiber output end of the laser device (not shown in the figure) to peel off the cladding light of the optical fiber output end of the laser device.

In the above embodiments, the description of each embodiment has its own emphasis. For the part not detailed in one embodiment, please refer to the relevant description of other embodiments.

The optical fiber stripper, the manufacturing method of optical fiber stripper, and the laser device provided by the present application are described in detail above. Specific examples are used in this application to explain the principles and implementations of the application. The description of the above embodiments is only used to help understand the method and core ideas of the application. Those skilled in the art should understand that they can still modify the technical solutions recorded in the aforementioned embodiments, or equivalent replace some of the technical features. However, these modifications or substitutions do not make the nature of the corresponding technical solutions separate from the scope of the technical solutions of the embodiments of the present application.

## Claims

1. An optical fiber stripper, wherein the optical fiber stripper comprises an optical fiber, the optical fiber comprises a fiber core and a cladding covering the fiber core; a surface of the cladding comprises a waveguide damage area and a light-transmitting area distributed along an extending direction of the optical fiber sequentially, the waveguide damage area is provided with a plurality of grooves distributed along the extending direction of the optical fiber sequentially, the light-transmitting area is provided with a plurality of micro-nano particles, and a particle size of each of the micro-nano particles is less than or equal to 200 nm.

2. The optical fiber stripper as claimed in claim 1, wherein a pitch between centers of two adjacent micro-nano particles is less than or equal to 200 nm.

3. The optical fiber stripper as claimed in claim 1, wherein the light-transmitting area is provided with a plurality of concave holes, and a bottom surface of each of the concave holes is protruded with the plurality of micro-nano particles.

4. The optical fiber stripper as claimed claim 3, wherein the micro-nano particles protrude from the bottom surface of each of the concave holes in a shape of column.

5. The optical fiber stripper as claimed in claim 4, wherein a height of the micro-nano particles in a protruding direction is less than or equal to 200 nm.

6. The optical fiber stripper as claimed in claim 3, wherein a pitch between centers of two adjacent concave holes is less than or equal to 200 $\mu$m.

7. The optical fiber stripper as claimed in claim 3, wherein the light-transmitting area is provided with a plurality of rows of the concave holes arranged at intervals along a circumference of the optical fiber sequentially, and the plurality of concave holes in each of the rows of the concave holes are sequentially distributed along the extending direction of the optical fiber.

8. The optical fiber stripper as claimed in claim 3, wherein the light-transmitting area is provided with a plurality of concave hole groups distributed at intervals along the extending direction of the optical fiber sequentially, and a plurality of concave holes in each of the concave hole groups are sequentially distributed at intervals along a circumference of the optical fiber.

9. The optical fiber stripper as claimed in claim 8, wherein the concave holes in two adjacent concave hole groups are mutually staggered.

10. The optical fiber stripper as claimed in claim 3, wherein each of the concave hole has a shape of a circular hole, a square hole, a triangular hole, or an elliptical hole.

11. The optical fiber stripper as claimed in claim 1, wherein a length of the light-transmitting area in the extending direction of the optical fiber is less than or equal to 10 mm.

12. The optical fiber stripper as claimed in claim 1, wherein a length of the light-transmitting area in the extending direction of the optical fiber is greater than 10 mm.

13. The optical fiber stripper as claimed in claim 1, wherein an extending direction of each of the grooves is at an included angle with the extending direction of the optical fiber.

14. The optical fiber stripper as claimed in claim 13, wherein the extending direction of each of the grooves is perpendicular to the extending direction of the optical fiber.

15. The optical fiber stripper as claimed in claim 1, wherein a maximum depth of each of the grooves from the surface of the cladding is less than or equal to 120 $\mu$m.

16. The optical fiber stripper as claimed in claim 1, wherein a length of the waveguide damage area in the extending direction of the optical fiber is less than or equal to 50 mm.

17. The optical fiber stripper as claimed in claim 1, wherein a length of the waveguide damage area in the extending direction of the optical fiber is greater than 50 mm.

18. The optical fiber stripper as claimed in claim 1, wherein the plurality of grooves in the waveguide damage area are sequentially adjacent in the extending direction of the optical fiber.

19. A laser device, wherein the laser device comprises the optical fiber stripper of claim 1.

20. A manufacturing method of an optical fiber stripper, wherein the optical fiber comprises a fiber core and a cladding covering the fiber core; a surface of the cladding comprises a waveguide damage area and a light-transmitting area distributed along an extending direction of the optical fiber sequentially; the method comprises:

　　processing and forming a plurality of grooves in the waveguide damage area of the cladding, the plurality of grooves being distributed along the extending direction of the optical fiber sequentially;
　　processing and forming a plurality of micro-nano particles in the light-transmitting area of the cladding, a particle size of each of the micro-nano particles being less than or equal to 200 nm.

FIG. 1

FIG. 2

| processing and forming a plurality of grooves in the waveguide damage area of the cladding, the plurality of grooves being distributed along the extending direction of the optical fiber sequentially | 210 |
|---|---|
| processing and forming a plurality of micro-nano particles in the light-transmitting area of the cladding, a particle size of each of the micro-nano particles being less than or equal to 200 nm | 220 |

FIG. 3

<table>
<tr><td colspan="2" align="center">**INTERNATIONAL SEARCH REPORT**</td><td colspan="2">International application No.<br>**PCT/CN2022/118218**</td></tr>
</table>

**A. CLASSIFICATION OF SUBJECT MATTER**

G02B 6/02(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT; CNKI; WPI; EPODOC: 光纤, 剥模, 剥离, 剥除, 包层, 透光, 凹槽, 微粒, 颗粒, 微纳, 纳米, 数值孔径; fiber, strip+, clad+, transmis+, groove?, particle, nanometer, nm, NA

**C. DOCUMENTS CONSIDERED TO BE RELEVANT**

| Category* | Citation of document, with indication, where appropriate, of the relevant passages | Relevant to claim No. |
|---|---|---|
| PX | CN 114527534 A (WUHAN RAYCUS FIBER LASER TECHNOLOGIES CO., LTD.) 24 May 2022 (2022-05-24)<br>description, paragraphs [0024]-[0059], and figures 1-3 | 1-20 |
| A | CN 109768459 A (SHENZHEN PENGXING OPTOELECTRONICS TECHNOLOGY CO., LTD.) 17 May 2019 (2019-05-17)<br>description, paragraphs [0024]-[0049], and figures 1-2 | 1-20 |
| A | CN 112955793 A (NLIGHT, INC.) 11 June 2021 (2021-06-11)<br>entire document | 1-20 |
| A | CN 107359496 A (MITSUBISHI CABLE INDUSTRIES. LTD.) 17 November 2017 (2017-11-17)<br>entire document | 1-20 |
| A | CN 110808527 A (WUHAN RAYCUS FIBER LASER TECHNOLOGIES CO., LTD.) 18 February 2020 (2020-02-18)<br>entire document | 1-20 |
| A | CN 114185132 A (WUHAN RAYCUS FIBER LASER TECHNOLOGIES CO., LTD.) 15 March 2022 (2022-03-15)<br>entire document | 1-20 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2022** | **15 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/118218** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016029454 A (MITSUBISHI CABLE INDUSTRIES LTD.) 03 March 2016 (2016-03-03) entire document | 1-20 |

Form PCT/ISA/210 (second sheet) (January 2015)

## INTERNATIONAL SEARCH REPORT
### Information on patent family members

International application No.

**PCT/CN2022/118218**

| Patent document cited in search report | | | Publication date (day/month/year) | Patent family member(s) | | | Publication date (day/month/year) |
|---|---|---|---|---|---|---|---|
| CN | 114527534 | A | 24 May 2022 | CN | 114527534 | B | 24 June 2022 |
| CN | 109768459 | A | 17 May 2019 | None | | | |
| CN | 112955793 | A | 11 June 2021 | US | 2020099190 | A1 | 26 March 2020 |
| | | | | EP | 3841411 | A1 | 30 June 2021 |
| | | | | WO | 2020061505 | A1 | 26 March 2020 |
| CN | 107359496 | A | 17 November 2017 | JP | 2017187523 | A | 12 October 2017 |
| | | | | JP | 6661446 | B2 | 11 March 2020 |
| | | | | CN | 107359496 | B | 30 March 2021 |
| CN | 110808527 | A | 18 February 2020 | CN | 210838431 | U | 23 June 2020 |
| CN | 114185132 | A | 15 March 2022 | CN | 114185132 | B | 29 July 2022 |
| JP | 2016029454 | A | 03 March 2016 | JP | 6420163 | B2 | 07 November 2018 |

Form PCT/ISA/210 (patent family annex) (January 2015)